# EUROPÄISCHE PATENTANMELDUNG

(11) **EP 2 282 411 A2**
(43) Veröffentlichungstag der Anmeldung: **09.02.2011**
(21) Anmeldenummer: 10170094.6
(22) Anmeldetag: 20.07.2010
(51) Int. Cl.: H04B 3/54

(54) **Vorrichtung zur Übermittlung von Informationen über eine Stromleitung in einem Wechselspannungsstromnetz**

(30) Priorität: 27.07.2009 DE 102009026256
(71) Anmelder: EnBW Energie Baden-Württemberg AG, 76131 Karlsruhe (DE)
(72) Erfinder: Walch, Lars, 76307, Karlsbad (DE); Heiss, Jürgen, 76229, Karlsruhe (DE)
(74) Vertreter: Meyer-Dulheuer, Karl-Hermann

(57) **Zusammenfassung**

Gegenstand der Erfindung ist eine Vorrichtung zur Übermittlung von Informationen über eine Stromleitung in einem Wechselspannungsstromnetz. Die zu lösende Aufgabe war es, eine Vorrichtung zur Verfügung zu stellen, die eine platzsparende Einbaulösung für den Schaltmittelschrank darstellt und die vorteilhaften Kommunikationsmöglichkeiten der Powerline Communication und/oder des Digitalstroms mit einem Schaltmittel verbindet.

Gelöst wird die Aufgabe durch die erfindungsgemäße Vorrichtung, die dadurch gekennzeichnet ist, dass sie in einem Schaltmittelgehäuse einen Schutzschalter und eine Vorrichtung zur gezielten Modulation der Wirkleistung bei einem oder mehreren Verbrauchern und/oder eine Vorrichtung zur Überlagerung der Wechselspannungsfrequenz mit einer oder mehreren Trägerfrequenzen, die mit einem Nutzsignal moduliert sind, beinhaltet.

## Beschreibung

Gegenstand der Erfindung ist eine Vorrichtung zur Übermittlung von Informationen über eine Stromleitung in einem Wechselspannungsstromnetz. Die Vorrichtung beinhaltet dazu eine oder mehrere Kommunikationseinrichtungen und einen Schutzschalter.

Zur Übermittlung von Informationen über eine Stromleitung in einem Wechselspannungsstromnetz sind in der Technik verschiedene Verfahren bekannt. So beschreibt die WO 2006/034866 A1 ein Verfahren, bei dem die Informationen durch eine gezielte Modulation der Wirkleistung bei einem oder mehreren Verbrauchern, die an ein Wechselspannungsstromnetz angeschlossen sind, übertragen werden. Diese Technik, die in einer Ausführungsvariante, in der die Variation der Wirkleistung in der Nähe des Nulldurchgangs der Sinuswelle der Wechselspannung auf einen beliebigen Wert erfolgt, als Digitalstrom bekannt ist, weist jedoch einige Nachteile auf. Für jeden einzelnen Stromkreis einer Hausinstallation ist hierfür ein eigener Modulator nötig. Eine Kommunikation über verschiedene Stromkreise hinweg ist nicht möglich. Ferner ist der Betrieb an einer Steigleitung im Haus, die mehrere Verteilerkästen verbindet, nicht möglich, weil die Leistung zu hoch für Digitalstrom ist. Es können damit nicht einzelne Wohneinheiten oder Etagen über das Digitalstromsystem verbunden werden.

Ein weiteres Verfahren zur Informationsübermittlung über Stromleitungen in Wechselspannungsstromnetzen, das mit einer Überlagerung der Wechselspannungsfrequenz mit einer oder mehreren Trägerfrequenzen, die mit dem Nutzsignal moduliert sind, arbeitet, ist in der Technik als Trägerfrequenzverfahren bekannt und wird auch als Powerline Communication (PLC) bezeichnet. Eine Ausführungsart dieser Trägerfrequenzanlagen, die insbesondere für Hausautomation und Internetverbindungen genutzt wird, verbindet die Ethernetschnittstelle mit der Kommunikation über die Stromleitung. Nachteilig ist an der Powerline Communication, dass es durch Abstrahlungen zu Funkstörungen und Elektrosmog kommen kann. Ferner bietet die PLC nicht die gleichen intelligenten Schalt-, Mess- und Automatisierungsfunktionen wie Digitalstrom. Zudem ist das System komplexer aufgebaut und daher teurer als Digitalstrom und es verbraucht mehr Energie.

Bei der Installation jedes dieser Kommunikationssysteme für eine Haus- oder Wohnungsinstallation tritt das Problem auf, dass diese in der Regel mit in die Schaltmittelschränke eingebaut werden müssen. Werden die Systeme gleich bei der Erstinstallation mit eingebaut, so lassen sich Platzprobleme im Schaltmittelschrank durch größere Dimensionierung desselben vermeiden. Bei einer Nachrüstung stellt sich jedoch häufig das Problem, dass alle oder fast alle Einbauplätze schon belegt sind. Eine nachträgliche Erweiterung ist aufwendig und ein größerer Schaltmittelschrank nicht immer möglich oder gewünscht.

Ausgehend von dieser Problematik ist es die Aufgabe der vorliegenden Erfindung, eine Vorrichtung zur Verfügung zu stellen, die eine platzsparende Einbaulösung für den Schaltmittelschrank darstellt und die vorteilhaften Kommunikationsmöglichkeiten der Powerline Communication und/oder des Digitalstroms mit einem Schaltmittel verbindet.

Gelöst wird die Aufgabe durch die erfindungsgemäße Vorrichtung zur Übermittlung von Informationen über eine Stromleitung in einem Wechselspannungsstromnetz, die **dadurch gekennzeichnet** ist, dass sie in einem Schaltmittelgehäuse einen Schutzschalter und eine Vorrichtung zur gezielten Modulation der Wirkleistung bei einem oder mehreren Verbrauchern und/oder eine Vorrichtung zur Überlagerung der Wechselspannungsfrequenz mit einer oder mehreren Trägerfrequenzen, die mit einem Nutzsignal moduliert sind, beinhaltet. Der Schutzschalter ist hierbei über mindestens eine der Kommunikationseinrichtungen fernauslösbar und/oder fernaktivierbar und/oder es kann eine Freigabe zur Aktivierung gegeben werden. Ersteres findet z. B. eine besonders nützliche Anwendung in Kombination mit einer Fernabfrage des Schaltzustandes eines angeschlossenen Digitalstromgerätes oder des aktuell gemessenen Stromverbrauches. Damit kann beispielsweise von unterwegs überprüft werden, ob ein Gerät auszuschalten vergessen wurde, und dessen Stromkreis nötigenfalls vom Strom getrennt werden. Letzteres betrifft in erster Linie eine Kommunikation zwischen Stromversorger und Stromkunde, bei der z. B. nach einer Netztrennung wegen Störung oder Zahlungsverzuges dem Stromkunden wieder die Möglichkeit der Stromnutzung freigegeben wird.

Bei der Vorrichtung zur gezielten Modulation der Wirkleistung bei einem oder mehreren Verbrauchern handelt es sich besonders bevorzugt um ein Digitalstrom Modul mit Digitalstrom Modem und Digitalstrom Meter. Und die Vorrichtung zur Überlagerung der Wechselspannungsfrequenz mit einer oder mehreren Trägerfrequenzen, die mit einem Nutzsignal moduliert sind, ist ebenso bevorzugt ein Powerline Communication Modul mit Powerline Communication Modem und Powerline Communication Koppelnetzwerk.

Der Schutzschalter ist bevorzugt ein Leitungsschutzschalter, ein Fehlerstromschutzschalter oder ein Fehlerstromschutzschalter mit integriertem Leitungsschutzschalter. Unter dem Leitungsschutzschalter, der allgemein auch als Sicherungsautomat oder neuerdings als MCB (Miniature Circuit Breaker) bezeichnet wird, ist hier der nach der EN 60898 (DIN VDE 0641) *"Leitungsschutzschalter für Hausinstallationen und ähnliche Zwecke"* definierte Begriff für eine wiederverwendbare, sich nicht selbsttätig zurückstellende Überstromschutzeinrichtung zu verstehen. Der Fehlerstromschutzschalter, der auch als FI-Schalter oder RCD (Residual Current protective Device) bekannt ist, überwacht das Netz auf eine Differenzstromstärke und trennt gegebenenfalls allpolig den Fehlerstromkreis ab. Beide Vorrichtungen können auch kombiniert sein, so dass der Schutzschalter sowohl gegen Überstrom als auch gegen das Bestehenbleiben eines unzulässig hohen Berührungsstromes schützt.

Durch die Kombination dieser Funktionselemente in einem einzigen Schaltmittelgehäuse lassen sich mehrere Vorteile erzielen. Dadurch, dass nur ein einzelnes Schaltmittelgehäuse für den Einbau nötig ist, lässt sich eine erfindungsgemäße Vorrichtung problemlos zusätzlich in einem noch freien Platz oder im Austausch gegen einen normalen Schutzschalter in vorhandene Installationsplätze im Schaltmittelschrank einbauen. Dazu ist es besonders vorteilhaft, wenn das Schaltmittelgehäuse ein Normgehäuse zur Hutschienenmontage ist.

Da die Schaltmittel und die Kommunikationseinrichtungen als integriertes Bauteil vorliegen, vereinfacht sich der Aufbau des Systems erheblich. Es sind keine zusätzlichen Leitungen und Verbindungen anzubringen, was neben der Materialeinsparung auch noch den Effekt hat, dass Fehler bei der Installation verhindert werden.

Die vorteilhafte Kombination von gleich zwei verschiedenen Kommunikationssystemen, namentlich Digitalstrom und PLC, mit einem Schaltmittel ermöglicht die durchgängige Kommunikation innerhalb eines ganzen Hauses. Innerhalb der Stromkreise wird über Digitalstrom kommuniziert und zwischen den Stromkreisen mittels PLC. Dazu werden die Digitalstrom- und PLC-Komponenten ganz besonders bevorzugt nicht nur in einem gemeinsamen Gehäuse untergebracht, sondern auch hard- und/oder softwaremäßig so verbunden, dass eine Bridgefunktion zwischen den beiden Kommunikationssystemen erzielt wird, die im Vergleich zu den Einzelkomponenten Zusatzfunktionen ermöglicht. Mittels der Bridgefunktion für die Kommunikationssysteme lassen sich bei einer Hausinstallation über PLC auch Räume ansprechen, die nicht über eine Digitalstromanbindung verfügen.

Die Kombination aus Digitalstrom und PLC erlaubt ferner die Abdeckung einer großen Bandbreite an Übertragungsgeschwindigkeiten. Während Digitalstrom im niederbitratigen Bereich (bis einige kBit/s) arbeitet und speziell auf die Übertragung von Schaltinformationen und kleineren Informationseinheiten ausgelegt ist, ist die Powerline Communication auf Übertragungsraten bis derzeit ca. 200 MBit/s geeignet. Im Gegensatz zu der Verbauung von Einzelkomponenten können bei der erfindungsgemäßen Vorrichtung werksseitig die Komponenten aufeinander abgestimmt werden, um eine optimale Übertragungsperformance sowohl innerhalb als auch zwischen den Systemen zu erzielen.

Einer der Zusatznutzen, der sich aus der Kombination eines Digitalstrom Moduls mit einem PLC Modul ergibt, ist die Möglichkeit, mit dem Digitalstrom Meter die Stromstärke und die Spannung im Stromkreis mit hoher Auflösung und hoher Samplingfrequenz zu messen und anschließend über das PLC Modul zu übertragen. Die messtechnischen Fähigkeiten der Digitalstrom Meter übersteigen die Übertragungsleistungen des Digitalstromsystems bei weitem, sodass erst mit einem PLC Übertragungskanal die volle Leistungsfähigkeit ausgenutzt werden kann.

Ebenso bietet die Kombination die Möglichkeit, gezielt einzelne Digitalstromgeräte auch über das Internet zu schalten. Ist man sich beispielsweise nach Verlassen des Hauses nicht sicher, ob man das Bügeleisen oder den Heizlüfter abgeschaltet hat, kann man sich durch eine Schaltzustandsabfrage über ein Smartphone oder einen PDA Gewissheit darüber verschaffen und nötigenfalls den Ausschaltbefehl senden.

Ein weiterer Vorteil, der aus der Kombination mindestens eines der Kommunikationssysteme mit einem Schutzschalter entsteht, ist die Möglichkeit der Fernabfrage des Status des Schutzschalters. In einer bevorzugten Ausgestaltungsvariante der Erfindung ist daher vorgesehen, dass der Status des Schutzschalters über mindestens eine der Kommunikationseinrichtungen abfragbar ist. Dadurch kann beispielsweise bei ausgelöstem Schutzschalter eine Warnmeldung sowohl hausintern als auch über das Internet z. B. auf einen PDA oder ein Smartphone ausgegeben werden.

Eine weitere bevorzugte Ausgestaltungsvariante der erfindungsgemäßen Vorrichtung sieht vor, dass das Schaltmittelgehäuse mit einer externen seriellen Datenschnittstelle und/oder mit einer externen Ethernet-Datenschnittstelle ausgestattet ist.

Besonders vorteilhaft ist es, wenn das Schaltmittelgehäuse mit einer Betriebsanzeige für Powerline Communication und/oder Digitalstrom ausgestattet ist.

In einer bevorzugten Ausgestaltungsvariante ist an das Powerline Communication Modul ein intelligenter Stromzähler angeschlossen.

Im Folgenden soll die Erfindung anhand einiger Ausführungsbeispiele, die keinesfalls einschränkend zu verstehen sind, näher erläutert werden. In allen dargestellten Ausführungsvarianten sind die Komponenten in einem normierten Schaltmittelgehäuse für die Hutschienenmontage verbaut. Somit lassen sich sämtliche vorgestellten Varianten bequem gegen den vorhandenen Schutzschalter im Verteilerschrank austauschen.

In den Zeichnungen sind jeweils die Stromleitung mit durchgezogenen Linien, die Datenkommunikation mit gestrichelten Linien und der Austausch von Steuersignalen und Statusinformationen mit punktierten Linien dargestellt.

### Beispiel 1

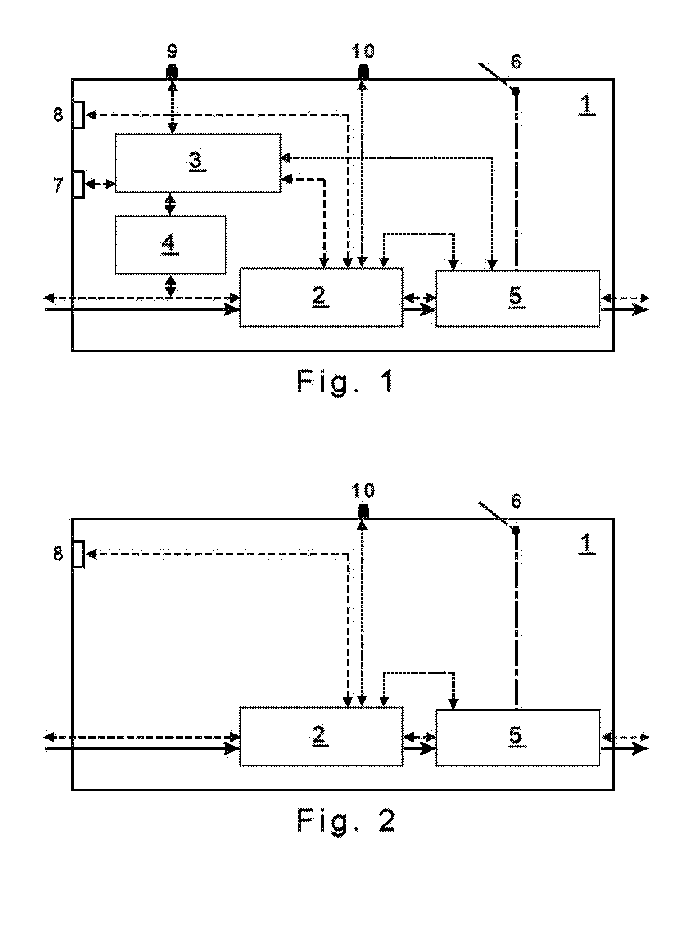

In Fig. 1 ist eine Kombination aus einem Leitungsschutzschalter mit Powerline Communication und Digitalstrom dargestellt. In einem Schaltmittelgehäuse (1) ist in die Stromleitung ein Digitalstrom Modem / Meter (2) eingeschleift. Ferner ist ein Powerline Communication Modem (3) über ein Powerline Communication Koppelnetzwerk (4) mit der Stromleitung verbunden. In Stromeingangsrichtung hinter dem Digitalstrom Modem / Meter (2) ist der Leitungsschutzschalter (5) angeordnet. Außen am Schaltmittelgehäuse (1) sind ein mechanischer Schalter (6) für die Betätigung des Leitungsschutzschalters (5), eine externe Ethernetschnittstelle (7), eine externe serielle Schnittstelle (8), eine Betriebsanzeige für Powerline Communication (9) und eine Betriebsanzeige für Digitalstrom (10) angebracht. Der Digitalstrom Modem / Meter (2) ist mit dem Powerline Communication Modem (3) intern über eine serielle Datenverbindung verbunden, die vorzugsweise nach dem RS 232c Standard arbeitet. Der Leitungsschutzschalter (5) ist sowohl mit dem Digitalstrom Modem / Meter (2) als auch mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 2

In Fig. 2 ist eine Kombination aus einem Leitungsschutzschalter mit Digitalstrom dargestellt. In einem Schaltmittelgehäuse (1) ist in die Stromleitung ein Digitalstrom Modem / Meter (2) eingeschleift. In Stromeingangsrichtung hinter dem Digitalstrom Modem / Meter (2) ist der Leitungsschutzschalter (5) angeordnet. Außen am Schaltmittelgehäuse (1) sind ein mechanischer Schalter (6) für die Betätigung des Leitungsschutzschalters (5), eine externe serielle Schnittstelle (8) und eine Betriebsanzeige für Digitalstrom (10) angebracht. Der Leitungsschutzschalter (5) ist mit dem Digitalstrom Modem / Meter (2) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 3

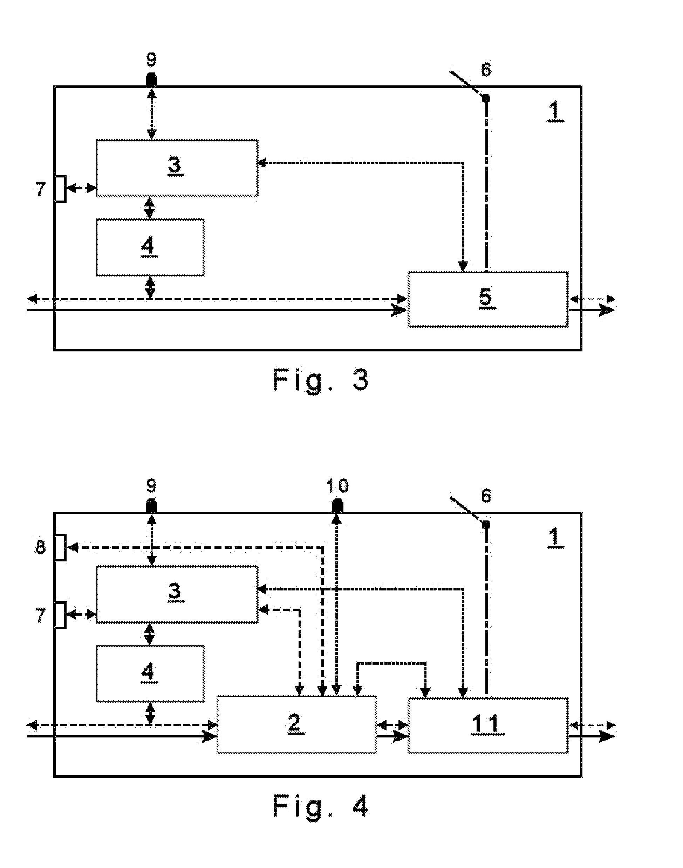

In Fig. 3 ist eine Kombination aus einem Leitungsschutzschalter mit Powerline Communication dargestellt. In einem Schaltmittelgehäuse (1) ist in die Stromleitung ein Leitungsschutzschalter (5) eingebaut. Ferner ist ein Powerline Communication Modem (3) über ein Powerline Communication Koppelnetzwerk (4) mit der Stromleitung verbunden. Außen am Schaltmittelgehäuse (1) sind ein mechanischer Schalter (6) für die Betätigung des Leitungsschutzschalters (5), eine externe Ethernetschnittstelle (7) und eine Betriebsanzeige für Powerline Communication (9) angebracht. Der Leitungsschutzschalter (5) ist mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 4

In Fig. 4 ist eine Kombination aus einem Fehlerstromsschutzschalter mit Powerline Communication und Digitalstrom dargestellt. In einem Schaltmittelgehäuse (1) ist in die Stromleitung ein Digitalstrom Modem / Meter (2) eingeschleift. Ferner ist ein Powerline Communication Modem (3) über ein Powerline Communication Koppelnetzwerk (4) mit der Stromleitung verbunden. In Stromeingangsrichtung hinter dem Digitalstrom Modem / Meter (2) ist der Fehlerstromschutzschalter (11) angeordnet. Außen am Schaltmittelgehäuse (1) sind ein mechanischer Schalter (6) für die Betätigung des Fehlerstromschutzschalters (11), ein Prüftaster für den Fehlerstromschutzschalter (11) (nicht zeichnerisch erfasst), eine externe Ethernetschnittstelle (7), eine externe serielle Schnittstelle (8), eine Betriebsanzeige für Powerline Communication (9) und eine Betriebsanzeige für Digitalstrom (10) angebracht. Der Digitalstrom Modem / Meter (2) ist mit dem Powerline Communication Modem (3) intern über eine serielle Datenverbindung verbunden, die vorzugsweise nach dem RS 232c Standard arbeitet. Der Fehlerstromschutzschalter (11) ist sowohl mit dem Digitalstrom Modem / Meter (2) als auch mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 5

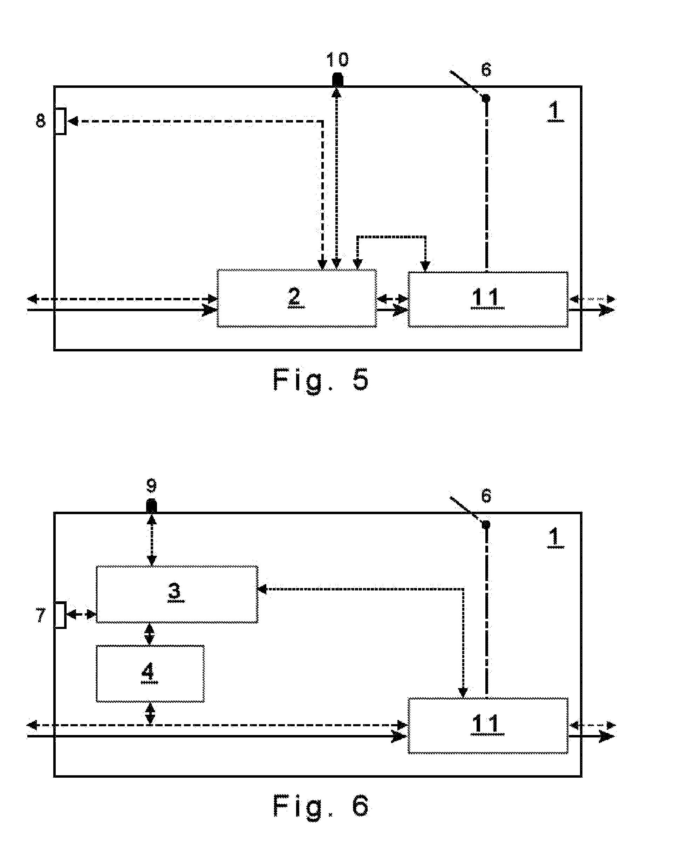

In Fig. 5 ist eine Kombination aus einem Fehlerstromschutzschalter mit Digitalstrom dargestellt. In einem Schaltmittelgehäuse (1) ist in die Stromleitung ein Digitalstrom Modem / Meter (2) eingeschleift. In Stromeingangsrichtung hinter dem Digitalstrom Modem / Meter (2) ist der Fehlerstromschutzschalter (11) angeordnet. Außen am Schaltmittelgehäuse (1) sind ein mechanischer Schalter (6) für die Betätigung des Fehlerstromschutzschalters (11), ein Prüftaster für den Fehlerstromschutzschalter (11) (nicht zeichnerisch erfasst), eine externe serielle Schnittstelle (8) und eine Betriebsanzeige für Digitalstrom (10) angebracht. Der Fehlerstromschutzschalter (11) ist mit dem Digitalstrom Modem / Meter (2) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 6

In Fig. 6 ist eine Kombination aus einem Fehlerstromschutzschalter mit Powerline Communication dargestellt. In einem Schaltmittelgehäuse (1) ist in die Stromleitung ein Fehlerstromschutzschalter (11) eingebaut. Ferner ist ein Powerline Communication Modem (3) über ein Powerline Communication Koppelnetzwerk (4) mit der Stromleitung verbunden. Außen am Schaltmittelgehäuse (1) sind ein mechanischer Schalter (6) für die Betätigung des Fehlerstromschutzschalters (11), ein Prüftaster für den Fehlerstromschutzschalter (11) (nicht zeichnerisch erfasst), eine externe Ethernetschnittstelle (7) und eine Betriebsanzeige für Powerline Communication (9) angebracht. Der Fehlerstromschutzschalter (11) ist mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 7

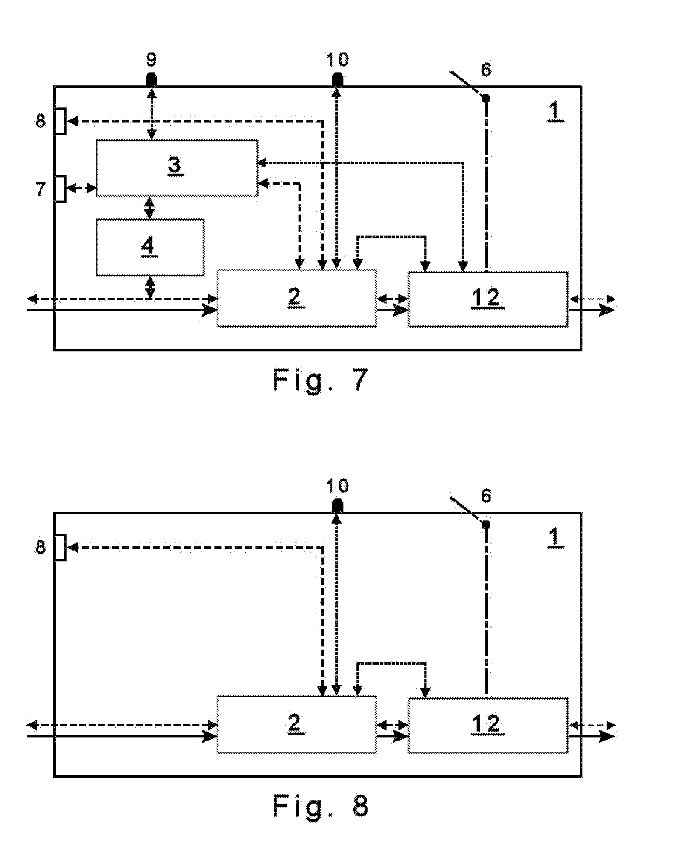

In Fig. 7 ist eine Kombination aus einem Fehlerstromsschutzschalter mit integriertem Leitungsschutzschalter mit Powerline Communication und Digitalstrom dargestellt. In einem Schaltmittelgehäuse (1) ist in die Stromleitung ein Digitalstrom Modem / Meter (2) eingeschleift. Ferner ist ein Powerline Communication Modem (3) über ein Powerline Communication Koppelnetzwerk (4) mit der Stromleitung verbunden. In Stromeingangsrichtung hinter dem Digitalstrom Modem / Meter (2) ist der Fehlerstromschutzschalter mit integriertem Leitungsschutzschalter (12) angeordnet. Außen am Schaltmittelgehäuse (1) sind ein mechanischer Schalter (6) für die Betätigung des Fehlerstromschutzschalters mit integriertem Leitungsschutzschalter (12), ein Prüftaster für den Fehlerstromschutzschalter mit integriertem Leitungsschutzschalter (12) (nicht zeichnerisch erfasst), eine externe Ethernetschnittstelle (7), eine externe serielle Schnittstelle (8), eine Betriebsanzeige für Powerline Communication (9) und eine Betriebsanzeige für Digitalstrom (10) angebracht. Der Digitalstrom Modem / Meter (2) ist mit dem Powerline Communication Modem (3) intern über eine serielle Datenverbindung verbunden, die vorzugsweise nach dem RS 232c Standard arbeitet. Der Fehlerstromschutzschalter mit integriertem Leitungsschutzschalter (12) ist sowohl mit dem Digitalstrom Modem / Meter (2) als auch mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 8

In Fig. 8 ist eine Kombination aus einem Fehlerstromschutzschalter mit integriertem Leitungsschutzschalter mit Digitalstrom dargestellt. In einem Schaltmittelgehäuse (1) ist in die Stromleitung ein Digitalstrom Modem / Meter (2) eingeschleift. In Stromeingangsrichtung hinter dem Digitalstrom Modem / Meter (2) ist der Fehlerstromschutzschalter mit integriertem Leitungsschutzschalter (12) angeordnet. Außen am Schaltmittelgehäuse (1) sind ein mechanischer Schalter (6) für die Betätigung des Fehlerstromschutzschalters mit integriertem Leitungsschutzschalter (12), ein Prüftaster für den Fehlerstromschutzschalter (11) (nicht zeichnerisch erfasst), eine externe serielle Schnittstelle (8) und eine Betriebsanzeige für Digitalstrom (10) angebracht. Der Fehlerstromschutzschalter mit integriertem Leitungsschutzschalter (12) ist mit dem Digitalstrom Modem / Meter (2) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Beispiel 9

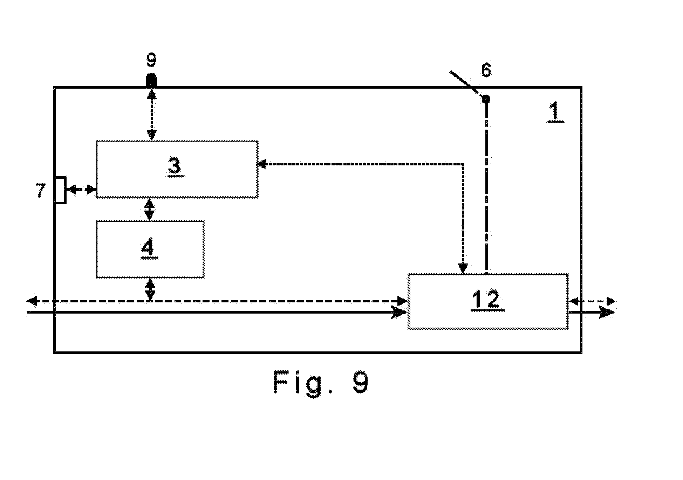

In Fig. 9 ist eine Kombination aus einem Fehlerstromschutzschalter mit integriertem Leitungsschutzschalter mit Powerline Communication dargestellt. In einem Schaltmittelgehäuse (1) ist in die Stromleitung ein Fehlerstromschutzschalter mit integriertem Leitungsschutzschalter (12) eingebaut. Ferner ist ein Powerline Communication Modem (3) über ein Powerline Communication Koppelnetzwerk (4) mit der Stromleitung verbunden. Außen am Schaltmittelgehäuse (1) sind ein mechanischer Schalter (6) für die Betätigung des Fehlerstromschutzschalters mit integriertem Leitungsschutzschalter (12), ein Prüftaster für den Fehlerstromschutzschalter mit integriertem Leitungsschutzschalter (12) (nicht zeichnerisch erfasst), eine externe Ethernetschnittstelle (7) und eine Betriebsanzeige für Powerline Communication (9) angebracht. Der Fehlerstromschutzschalter mit integriertem Leitungsschutzschalter (12) ist mit dem Powerline Communication Modem (3) über Steuerleitungen verbunden, über die die Statusinformationen und die Fernauslösungs-, Fernaktivierungs- und Aktivierungsfreigabebefehle kommuniziert werden. Für die Fernaktivierung ist zur Zurücksetzung des mechanischen Schalters (6) noch eine nicht in der Zeichnung erfasste Vorrichtung (z. B. ein Elektromotor oder ein Elektromagnet) eingebaut.

### Bezuaszeichen liste

- (1): Schaltmittelgehäuse
- (2): Digitalstrom Modem / Meter
- (3): Powerline Communication Modem
- (4): Powerline Communication Koppelnetzwerk
- (5): Leitungsschutzschalter
- (6): Mechanischer Schalter
- (7): externe Ethernetschnittstelle
- (8): externe serielle Schnittstelle
- (9): Betriebsanzeige Powerline Communication
- (10): Betriebsanzeige Digitalstrom
- (11): Fehlerstromschutzschalter
- (12): Leitungsschutzschalter mit integriertem Fehlerstromschutzschalter

## Patentansprüche

1. Vorrichtung zur Übermittlung von Informationen über eine Stromleitung in einem Wechselspannungsstromnetz, **dadurch gekennzeichnet, dass** sie in einem Schaltmittelgehäuse einen Schutzschalter und eine Vorrichtung zur gezielten Modulation der Wirkleistung bei einem oder mehreren Verbrauchern und/oder eine Vorrichtung zur Überlagerung der Wechselspannungsfrequenz mit einer oder mehreren Trägerfrequenzen, die mit einem Nutzsignal moduliert sind, beinhaltet, wobei der Schutzschalter über mindestens eine der Kommunikationseinrichtungen fernauslösbar und/oder fernaktivierbar ist und/oder eine Freigabe zur Aktivierung gegeben werden kann.

2. Vorrichtung nach Anspruch 1, **dadurch gekennzeichnet, dass** die Vorrichtung zur gezielten Modulation der Wirkleistung bei einem oder mehreren Verbrauchern ein Digitalstrom Modul mit Digitalstrom Modem und Digitalstrom Meter ist.

3. Vorrichtung nach Anspruch 1 und 2, **dadurch gekennzeichnet, dass** die Vorrichtung zur Überlagerung der Wechselspannungsfrequenz mit einer oder mehreren Trägerfrequenzen, die mit einem Nutzsignal moduliert sind, ein Powerline Communication Modul mit Powerline Communication Modem und Powerline Communication Koppelnetzwerk ist.

4. Vorrichtung nach einem der Ansprüche 1 bis 3, **dadurch gekennzeichnet, dass** der Schutzschalter ein Leitungsschutzschalter, ein Fehlerstromschutzschalter oder ein Fehlerstromschutzschalter mit integriertem Leitungsschutzschalter ist.

5. Vorrichtung nach einem der Ansprüche 1 bis 4, **dadurch gekennzeichnet, dass** das Schaltmittelgehäuse ein Normgehäuse zur Hutschienenmontage ist.

6. Vorrichtung nach einem der Ansprüche 1 bis 5, **dadurch gekennzeichnet, dass** der Status des Schutzschalters über mindestens eine der Kommunikationseinrichtungen abfragbar ist.

7. Vorrichtung nach einem der Ansprüche 1 bis 7, **dadurch gekennzeichnet, dass** das Schaltmittelgehäuse mit einer externen seriellen Datenschnittstelle und/oder mit einer externen Ethernet-Datenschnittstelle ausgestattet ist.

8. Vorrichtung nach einem der Ansprüche 1 bis 8, **dadurch gekennzeichnet, dass** das Schaltmittelgehäuse mit einer Betriebsanzeige für Powerline Communication und/oder Digitalstrom ausgestattet ist.

9. Vorrichtung nach einem der Ansprüche 1 bis 9, **dadurch gekennzeichnet, dass** an das Powerline Communication Modul ein intelligenter Stromzähler angeschlossen ist.
